(19) Europäisches Patentamt
European Patent Office
Office européen des brevets

(11) EP 3 112 274 B1

(12) FASCICULE DE BREVET EUROPEEN

(45) Date de publication et mention
de la délivrance du brevet:
**13.09.2017 Bulletin 2017/37**

(51) Int Cl.:
**B64G 1/32** (2006.01)          **B64G 1/64** (2006.01)
**B64G 1/10** (2006.01)

(21) Numéro de dépôt: **16170294.9**

(22) Date de dépôt: **19.05.2016**

(54) **SYSTÈME SPATIAL POUR RÉDUIRE LES VITESSES ANGULAIRES D'UN DÉBRIS SPATIAL AVANT DE LE DÉSORBITER**

WELTRAUMSYSTEM ZUR REDUZIERUNG DER WINKELGESCHWINDIGKEITEN VON WELTRAUMMÜLL VOR DESSEN AUSLENKUNG AUS DER UMLAUFBAHN

SPATIAL SYSTEM FOR REDUCING THE ANGULAR VELOCITIES OF SPACE DEBRIS BEFORE REMOVING SAME FROM ORBIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2015 FR 1501396**

(43) Date de publication de la demande:
**04.01.2017 Bulletin 2017/01**

(73) Titulaire: **THALES**
**92400 Courbevoie (FR)**

(72) Inventeur: **LE PEUVEDIC, Catherine**
**06156 CANNES LA BOCCA (FR)**

(74) Mandataire: **Tanguy, Yannick et al**
**Marks & Clerk France**
**Conseils en Propriete Industrielle**
**Immeuble Visium**
**22, avenue Aristide Briand**
**94117 Arcueil Cedex (FR)**

(56) Documents cités:
**EP-A1- 2 746 163      EP-A1- 2 774 855**
**EP-A1- 2 860 115      US-A1- 2011 121 139**

• **CAUBET ALBERT ET AL: "Design of an Attitude Stabilization Electromagnetic module for detumbling uncooperative targets", 2014 IEEE AEROSPACE CONFERENCE, IEEE, 1 mars 2014 (2014-03-01), pages 1-13, XP032607533, DOI: 10.1109/AERO.2014.6836325**

**Description**

La présente invention concerne un système spatial pour réduire les vitesses angulaires d'un débris spatial avant de le désorbiter et un procédé correspondant de mise en oeuvre dudit système.

De nos jours, le besoin d'un retrait actif des débris spatiaux ADR (en anglais Active Debris Removal) est reconnu.

Au cours d'une mission de retrait actif d'un débris spatial en orbite autour de la Terre, un engin spatial chasseur ou un satellite chasseur doit aller à la rencontre du débris de grande taille, par exemple un satellite cible, avec l'objectif de modifier son orbite soit pour une réentrée dans l'atmosphère ou un placement dans une orbite cimetière de ce dernier.

Différentes techniques de capture de débris de grandes tailles ont été proposées et peuvent être classées en trois classes :

.- une première classe dans laquelle un lien rigide entre le débris et l'engin chasseur est établi par exemple au travers de bras robotiques ou de mécanismes de saisie ou de prise ;
.- une deuxième classe dans laquelle un lien souple entre le débris et l'engin chasseur est mis en oeuvre par exemple en utilisant des filets ou des harpons ;
.- une troisième classe, formée par des systèmes de capture sans contact de l'engin chasseur avec le débris et utilisant par exemple une projection de mousse ou un guidage par faisceau d'ions.

Un des principaux problèmes du retrait actif d'un débris ADR est la maitrise des variations des angles d'attitude du satellite cible, de par sa rotation propre (en anglais tumbling), ces variations pouvant être rapides et même désordonnées.

Un satellite chasseur en approche d'un satellite cible à variations angulaires non maitrisées présente un risque de collision plus élevé avec ce dernier, et le processus de capture du débris est rendu plus complexe, nécessitant un système de contrôle à bord du satellite chasseur ayant des performances élevées de navigation et de positionnement relatif. Il a été proposé par exemple d'approcher le débris en évitant d'entrer en collision avec ses appendices, puis de venir s'accrocher au débris avant de freiner sa rotation. Cette solution requiert une bonne manoeuvrabilité du satellite chasseur, une quantité de carburant suffisante à sa disposition, et demeure assez risquée.

Lorsqu'une technique de première classe est utilisée, par exemple celle d'un bras robotique, et que la taille du débris est grande, les charges maximales exercées sur le bras par le débris peuvent être élevées, et rendent difficile la mise en oeuvre de cette technique.

Les techniques de la troisième classe comme par exemple l'interaction par faisceau d'ions ou de particules (jets de tuyères par exemple) ou l'interaction électrostatique sont compatibles de vitesses angulaires débris élevées, mais présentent l'inconvénient de conduire à des durées de désorbitation très longues.

S'agissant des techniques de la seconde classe utilisant des filets ou des harpons, elles permettent de capturer une gamme plus grande de débris en terme de configuration géométrique, mais sont délicates à mettre en oeuvre lorsque la vitesse de rotation du débris est élevée à cause des risques d'enroulement du lien flexible autour du débris.

Dans le cadre de techniques de la seconde classe, l'article de A. Caubet et al., intitulé « Design of an Attitude Stabilization Electromagnetic Module for Detumbling Uncooperative Targets », 2014 IEEE Aerospace Conference, Pitscataway, New Jersey décrit un système de stabilisation de la dynamique en attitude d'un débris de grande taille pour faciliter la capture de ce dernier. Le système comprend un module électromagnétique de stabilisation d'attitude ayant une petite taille par rapport au débris et incluant au moins deux magnéto-coupleurs ainsi qu'une source d'alimentation électrique. Le module électromagnétique de stabilisation d'attitude, embarqué initialement à bord d'un engin spatial chasseur, est attaché ou fixé dans une première étape au débris qui est par exemple un satellite cible, puis est activé dans une deuxième étape pour fonctionner comme un actionneur de génération d'un champ magnétique externe qui stabilise l'attitude du débris cible en interagissant avec le champ magnétique terrestre et en amortissant le moment angulaire du débris. Une fois l'attitude du débris stabilisé, l'engin spatial peut approcher le débris lentement et réaliser sa capture en toute sécurité.

L'article de A. Caubet décrit un premier mode de réalisation de la première étape d'attache et de fixation du module au satellite qui utilise un harpon attaché à une longe dont l'autre extrémité est fixée à l'engin chasseur. Le harpon attaché à la longe est projeté depuis l'engin chasseur sur le débris cible avec un vol du harpon et un déploiement de la longe de courte portée. Puis le module électromagnétique est déplacé le long de la longe par exemple à l'aide d'un simple dispositif à poulie motorisé pour atteindre la surface du débris cible dans laquelle est accrochée le harpon. Si cette approche n'est pas exécutée suffisamment rapidement, un risque important existe d'enchevêtrement et d'enroulement de la longe autour du satellite cible. En conséquence, l'engin chasseur doit évoluer à proximité du débris avec un risque de collision élevé.

Afin de pallier ces inconvénients, l'article de A. Caubet décrit un deuxième mode de réalisation de la première étape d'attache et de fixation du module au satellite dans lequel le module électromagnétique utilise des moyens propres de propulsion pour voler de manière autonome depuis l'engin chasseur vers le débris cible. Toutefois, cette approche requiert l'installation de moyens de propulsion autonomes, et de capteurs supplémentaires à bord du module électromagnétique ainsi que l'augmentation de ses capacités de calcul, ce qui rend plus complexe la mise en oeuvre de l'attachement et de la fixation du module électromagnétique au débris cible.

Le problème technique est ainsi de réaliser un système électromagnétique par magnéto-coupleur(s) de réduction de vitesses angulaires de débris de grande taille qui soit à la fois simple en termes d'architecture et de mise en oeuvre, et sans danger de collision pour l'engin chasseur en charge de la désorbitation ultérieure du débris.

A cet effet, l'invention a pour objet un système spatial de réduction de vitesses angulaires d'un débris spatial, le système spatial comprenant :

.- un engin spatial chasseur, placé suffisamment distant du débris spatial pour éviter d'entrer en collision avec ce dernier et permettre une visée d'au moins une de ses faces de grande taille pour lui attacher un ou plusieurs magnéto-coupleurs,

.- au moins un ou plusieurs magnéto-coupleurs configurés pour être lancés depuis l'engin chasseur vers le débris spatial et générer sur commande après leur arrimage au débris spatial un ou plusieurs champs magnétiques de couplage au champ magnétique terrestre ; caractérisé en ce que le système spatial comporte :

.- un dispositif de lancement par impulsion du ou des magnéto-coupleurs de l'engin spatial vers le débris spatial, le dispositif de lancement étant fixé à l'engin chasseur et incluant au moins un fût de canon lanceur pour guider le ou les magnéto-coupleurs vers le débris spatial, et

.- le ou les magnéto-coupleurs comportent chacun une bobine électromagnétique et au moins un élément d'auto-arrimage à une face du débris sous l'action de la ou des quantités de mouvement du ou des magnéto-coupleurs imprimées par le dispositif de lancement.

Suivant des modes particuliers de réalisation, le système de réduction de vitesses angulaires d'un débris spatial comprend l'une ou plusieurs des caractéristiques suivantes :

.- chaque magnéto-coupleur est configuré pour être lancé séparément depuis l'engin chasseur et arrimé séparément au débris spatial, ou au moins deux magnéto-coupleurs sont intégrés en un module électromagnétique et partagent au sein du module électromagnétique un ou plusieurs éléments d'auto-arrimage ;

.- lorsqu'au moins deux magnéto-coupleurs sont intégrés en un module électromagnétique, les au moins deux magnéto-coupleurs sont pré-déployés avant leur lancement, ou les au moins deux magnéto-coupleurs sont serrés parallèlement les uns contre les autres de manière compacte dans une position de gerbage lors de leur lancement et déployés en dièdre ou polyèdre sous l'action d'un mécanisme de déploiement lors de leur arrimage au débris ;

.- le dispositif de lancement comporte un fût unique de canon adapté à la taille d'un magnéto-coupleur ou la taille du module électromagnétique, et un barillet de chargement des magnéto-coupleurs lorsqu'il est prévu de lancer et d'arrimer séparément chaque magnéto-coupleur ;

.- l'élément d'auto-arrimage est un élément compris dans l'ensemble formé par les éléments autoadhésifs, les éléments de type pinces, et les éléments de type harpons ;

.- lorsque les magnéto-coupleurs sont configurés pour être lancés et arrimés séparément, chaque magnéto-coupleur comporte une batterie d'alimentation électrique différente, ou lorsqu'au moins deux magnéto-coupleurs sont intégrés en un module électromagnétique, les au moins deux magnéto-coupleurs peuvent partager une même batterie d'alimentation électrique au sein du module électromagnétique ;

.- chaque magnéto-coupleur comporte un absorbeur de choc différent lorsque les magnéto-coupleurs sont configurés pour être lancés et arrimés séparément, ou lorsqu'au moins deux magnéto-coupleurs sont intégrés en un module électromagnétique, les au moins deux magnéto-coupleurs partagent un même absorbeur de choc au sein du module électromagnétique ;

.- chaque magnéto-coupleur comporte un récepteur de commandes radiofréquences RF différent et un générateur d'impulsions de courant différent branché sur sa batterie d'alimentation, la largeur et la polarité des impulsions de courant étant modulées en fonction des commandes radiofréquences RF reçues lorsque les magnéto-coupleurs sont configurés pour être lancés et arrimés séparément; ou lorsqu'au moins deux magnéto-coupleurs sont intégrés en un module électromagnétique, les au moins deux magnéto-coupleurs partagent un même récepteur de commandes radiofréquences RF au sein du module électromagnétique et comportent chacun un générateur d'impulsions de courant différent branché sur la batterie d'alimentation commune, la largeur et la polarité des impulsions de courant étant modulées en fonction de commandes radiofréquences différentes reçues par le récepteur RF commun ;

.- le système spatial comprend en outre au moins un émetteur de commandes radiofréquences RF destinées à l'au moins un récepteur de commandes radioélectriques RF, l'au moins un émetteur étant embarqué à bord de l'engin chasseur ;

.- chaque émetteur radiofréquence comporte un modulateur de signal radiofréquence et une chaine d'amplification radiofréquence d'émission, et chaque récepteur radiofréquence comporte une chaine d'amplification radiofréquence et un démodulateur, et les modulateurs et démodulateurs utilisent une modulation numérique robuste multi-états, de préférence à deux états ;

.- la bande de fréquences du signal de commande radiofréquence est une bande de fréquence comprise dans l'ensemble des bandes VHF et UHF;

. chaque magnéto-coupleur comporte une tige ferromagnétique de forme cylindrique sur laquelle est enroulée une bobine électromagnétique ;

.- lorsque les magnéto-coupleurs sont configurés pour être lancés et arrimés séparément, la tige de chaque magnéto-coupleur comporte une ou plusieurs cavités pour recevoir et abriter une batterie d'alimentation électrique et/ou un récepteur radiofréquence de commandes et/ou un générateur d'impulsions de courant, et/ou chaque magnéto-coupleur comporte un absorbeur de choc disposé longitudinalement de part et d'autre de sa tige ferromagnétique ;

.- le ou les magnéto-coupleurs ou le module électromagnétique sont attachés lors de leur lancement à l'engin chasseur par au moins une longe flexible et de faible masse, la ou les longes étant détachables de l'engin chasseur après auto-arrimage du ou des magnéto-coupleurs au débris spatial ;

.- le système spatial comprend en outre un dispositif d'observation des mouvements angulaires et d'estimation de l'attitude et des vitesses angulaires du débris, un ensemble de magnétomètres montés sur l'engin chasseur pour estimer le champ magnétique terrestre Bt, et un module d'élaboration de commandes de réduction des vitesses angulaires du débris à partir des vitesses angulaires estimées du débris et du champ magnétique terrestre estimé.

L'invention a également pour objet un procédé de réduction de vitesses angulaires d'un débris spatial mis en oeuvre par un système spatial comprenant :

.- un engin spatial chasseur,

.- au moins un ou plusieurs magnéto-coupleurs comportant chacun une bobine électromagnétique différente et au moins un élément d'auto-arrimage,

.- un dispositif de lancement par impulsion du ou des magnéto-coupleurs, embarqué à bord du et fixé à l'engin chasseur, le dispositif de lancement incluant au moins un fût de canon lanceur pour guider le ou les magnéto-coupleurs; ledit procédé comprenant les étapes consistant à :

.- placer l'engin chasseur suffisamment distant du débris spatial pour lui éviter d'entrer en collision avec ce dernier et lui permettre une visée d'au moins une des faces de grande taille du débris pour lui attacher un ou plusieurs magnéto-coupleurs ;

.- lancer le ou les magnéto-coupleurs par le dispositif de lancement depuis l'engin chasseur vers le débris spatial, en les guidant le long du ou des fûts de canon lanceur après la création de la ou des impulsions initiales ;

.- auto-arrimer le ou les magnéto-coupleurs à une face du débris par l'au moins un élément d'auto-arrimage sous l'action de la ou des quantités de mouvement du ou des magnéto-coupleurs imprimées par le dispositif de lancement ;

.- faire générer par le ou les magnéto-coupleurs un ou plusieurs champs magnétiques de couplage au champ magnétique terrestre, le ou les champs magnétiques de couplage étant modulées suivant une loi de commandes transmise au travers d'une liaison radiofréquence, la loi de commande étant élaborée à partir d'une estimation du champ magnétique terrestre et d'une estimation de l'attitude et des vitesses angulaires du débris effectuées au niveau du satellite chasseur.

L'invention sera mieux comprise à la lecture de la description de plusieurs formes de réalisation qui va suivre, donnée uniquement à titre d'exemple et faite en se référant aux dessins sur lesquels :

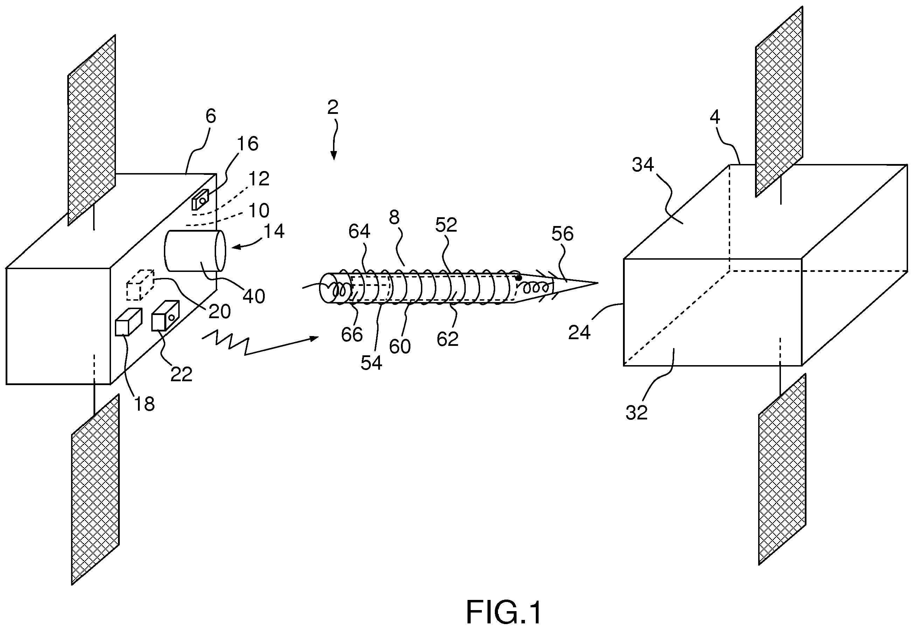

.- la Figure 1 est une vue d'un premier mode de réalisation d'un système spatial de réduction de vitesses angulaires d'un débris spatial ;

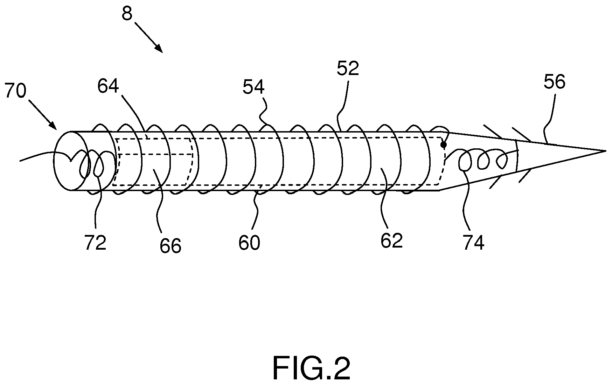

.- la Figure 2 est une vue d'un magnéto-coupleur du système de la Figure 1 suivant la première forme de réalisation, le magnéto- coupleur étant prévu d'être lancé et auto-arrimé individuellement au débris ;

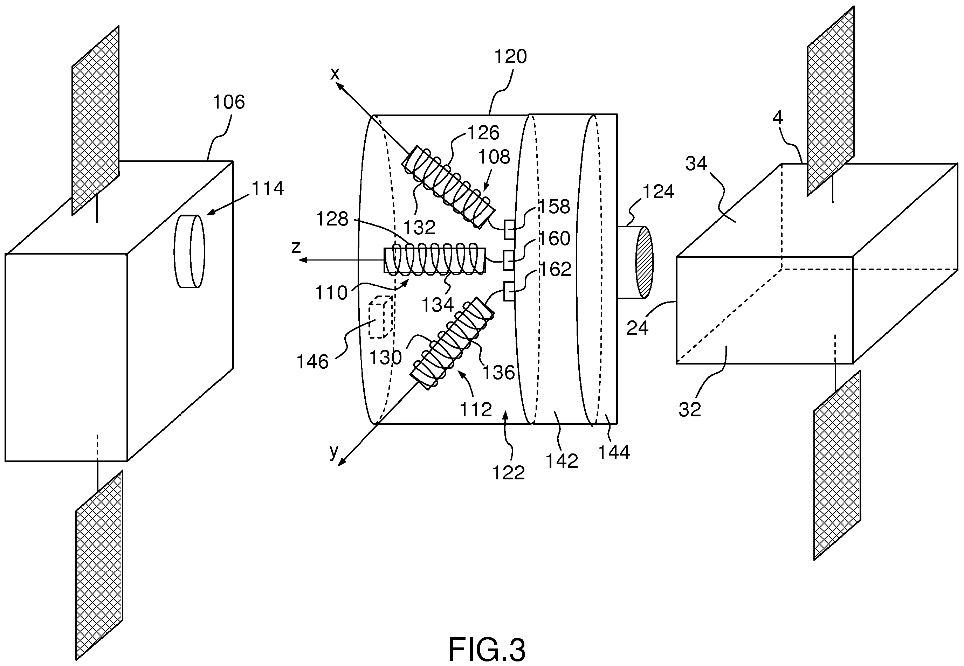

.- la Figure 3 est une vue d'un ensemble de trois magnéto-coupleurs d'un deuxième mode de réalisation d'un système de réduction de vitesses angulaires, dérivé du système de la Figure 1, les trois magnéto-coupleurs étant intégrés au sein d'un module électromagnétique, lequel module électromagnétique est configuré pour être lancé depuis un engin spatial chasseur et auto-arrimé à un débris spatial ;

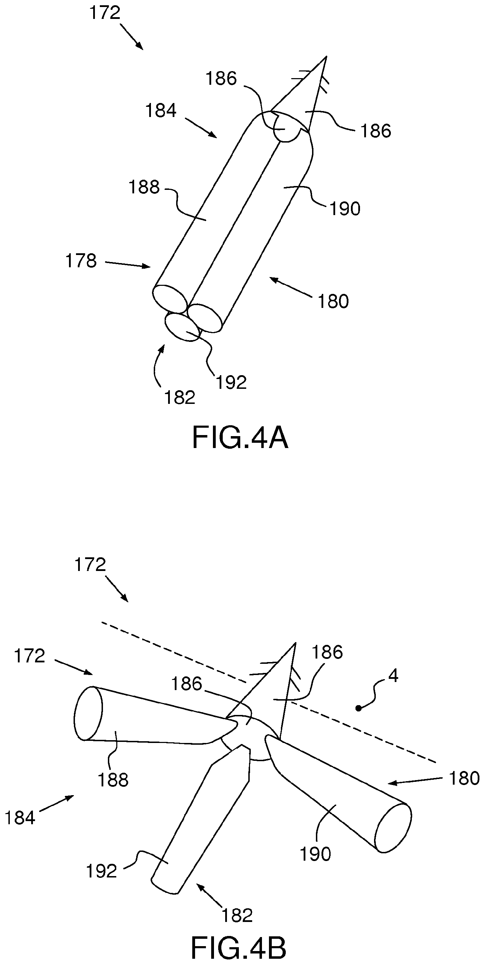

.- les Figures 4A et 4B sont les vues respectives d'un ensemble de trois magnéto-coupleurs d'un troisième mode de réalisation d'un système de réduction de vitesses angulaires d'un débris spatial dans une position gerbée lors de leur lancement et dans une position de déploiement après leur arrimage au débris ;

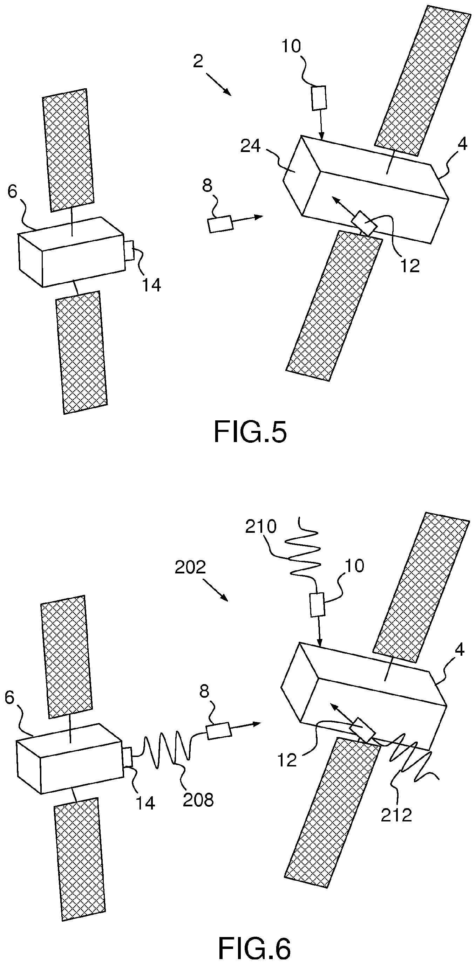

.- la Figure 5 est une vue d'une phase d'un lancement séparé de trois magnéto-coupleurs du système de la Figure 1, deux magnéto-coupleurs étant déjà amarrés sur deux faces différentes non coplanaires du débris et le troisième magnéto-coupleur étant en cours de lancement vers une troisième face du débris ayant une orientation différente de celles des deux autres faces d'auto-amarrage du débris ;

.- la Figure 6 est une vue d'une phase d'un lancement séparé de trois magnéto-coupleurs d'un troisième mode de réalisation d'un système de réduction de vitesses angulaire, dérivé du système de la Figure 1, dans lequel les magnéto-coupleurs sont attachés à l'engin chasseur lors de leur phase de lancement, et détachés de ce dernier après leur amarrage au débris ;

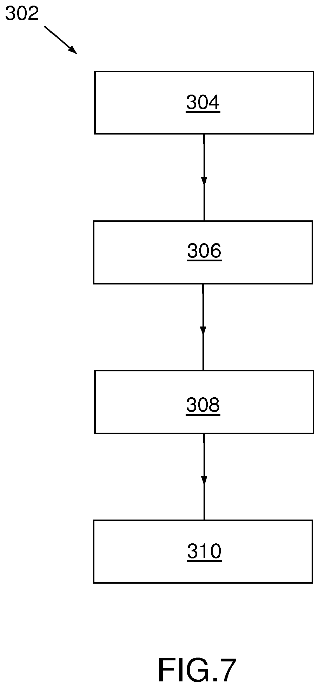

.- la Figure 7 est une vue d'un organigramme d'un procédé de réduction de vitesses angulaires mis en oeuvre par le système de la Figure 1 ;

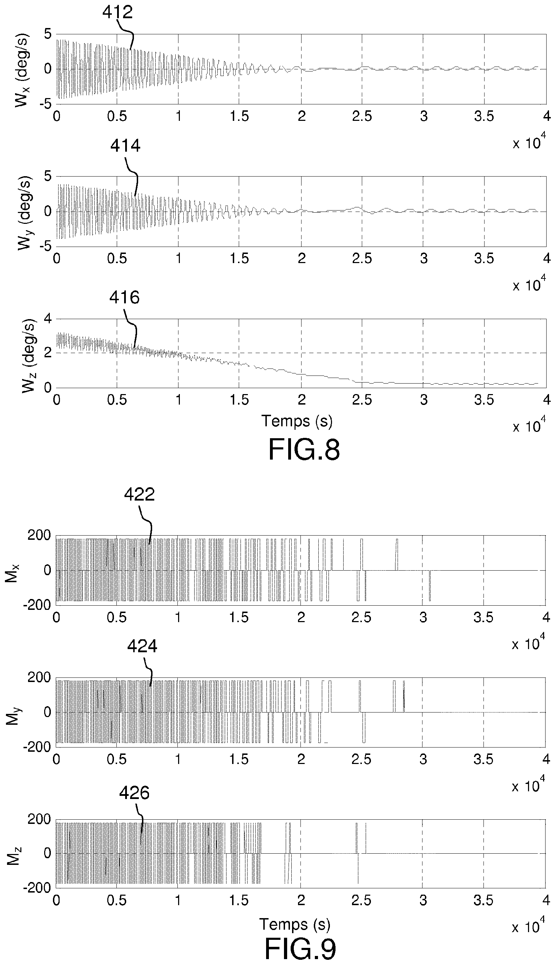

.- les Figures 8 et 9 sont des vues d'un exemple typique de l'évolution temporelle simulée de trois vitesses angulaires d'un satellite débris autour de trois axes X, Y, Z mutuellement orthogonaux, et de l'évolution temporelle simulée des trois moments magnétiques selon les axes X, Y, Z générés par les magnéto-coupleurs du système 1, lancés et auto-amarrés suivant le procédé des Figures 5 à 7 ;

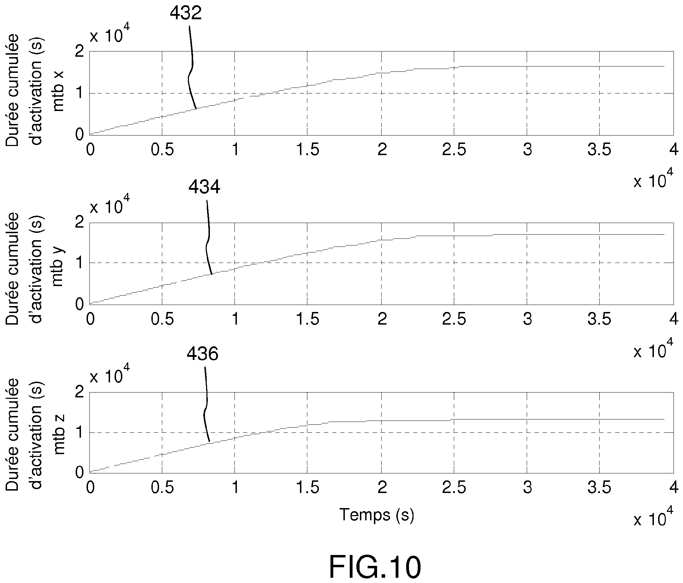

- la Figure 10 est une vue des durées d'activation des magnéto-coupleurs selon les axes X, Y, Z, utilisées dans les conditions de la simulation décrite par les Figures 8 et 9.

Suivant la Figure 1 et un premier mode de réalisation, un système spatial 2 de réduction de vitesses angulaires d'un débris spatial 4 comprend un engin spatial chasseur 6, trois magnéto-coupleurs 8, 10, 12, un dispositif de lancement 14 des magnéto-coupleurs 8, 10, 12 vers le débris, un dispositif d'observation 16 des mouvements angulaires et d'estimation de l'attitude et des vitesses angulaires du débris spatial 4, un ensemble de magnétomètres 18 montés sur l'engin chasseur 6 pour estimer le champ magnétique terrestre, un module 20 d'élaboration de commandes de réduction des vitesses angulaires du débris 4 à faire exécuter par les trois magnéto-coupleurs 8, 10, 12, et au moins un émetteur 22 de commandes radiofréquences RF destinées aux magnéto-coupleurs 8, 10, 12.

L'engin spatial chasseur 6 est placé par ses dispositifs de propulsion et de navigation, non représentés sur la Figure 1, suffisamment distant du débris spatial 4 pour éviter d'entrer en collision avec ce dernier et permettre une visée d'au moins une de ses faces de grande taille pour lui attacher un ou plusieurs magnéto-coupleurs. L'engin spatial chasseur 6 est ici un satellite chasseur.

En variante, l'engin spatial chasseur est une navette spatiale ou tout engin spatial disposant d'une certaine autonomie pour approcher un débris, et d'une certaine envergure pour supporter un lanceur et ses projectiles de magnéto-couplage et pour embarquer un calculateur électronique de contrôle des magnéto-coupleurs

Sur la Figure 1, trois magnéto-coupleurs 8, 10, 12, sont utilisés pour stabiliser le débris 4 de grande taille que constitue ici un satellite cible, seul le magnéto-coupleur 8 étant clairement représenté en cours de lancement ou de projection vers une face 24 de grande taille du débris 4. La face 24 est ici un panneau de la plateforme d'un satellite.

Les deux magnéto-coupleurs restants 10, 12 sont abrités et logés à l'intérieur de la plateforme 26 du satellite chasseur 6 en attendant d'être lancés vers deux autres faces différentes 32, 34 du satellite cible 4.

Il est à remarquer que le nombre de magnéto-coupleurs requis pour stabiliser un débris de grande taille dépend de sa vitesse de rotation (rotation selon un axe pur ou combinée selon deux ou trois axes), du champ magnétique terrestre sur son orbite, de l'orientation des faces accessibles, et de la durée de stabilisation désirée.

De manière générale, c'est-à-dire dans les cas les plus fréquents, ce nombre est égal à 2 ou 3.

Dans la Figure 1, il est supposé que le freinage de la rotation requiert un nombre de trois magnéto-coupleurs.

Les magnéto-coupleurs 8, 10, 12 sont configurés pour être lancés depuis l'engin chasseur 6 vers le débris spatial 4 et générer sur commande après leur arrimage au débris spatial 4 un ou plusieurs champs magnétiques de couplage B au champ magnétique terrestre Bt.

Le dispositif de lancement 14 est un dispositif de lancement à impulsion, par exemple de type pyrotechnique, fixé au satellite chasseur 6, tourné vers l'extérieur du satellite chasseur 6, et incluant un unique fût de canon lanceur 40 pour guider l'un après l'autre les trois magnéto-coupleurs 8, 10, 12 vers le débris spatial.

En variante, le dispositif de lancement comporte une batterie de trois fûts de canon pré-chargés chacun d'un magnéto-coupleur.

Suivant la Figure 1, chaque magnéto-coupleur 8, 10, 12 est configuré pour être lancé séparément, c'est-à-dire individuellement, depuis l'engin chasseur 6 et arrimé séparément à une face différente 24, 32, 34 du débris 4.

Les magnéto-coupleurs 8, 10, 12 comportent chacun, empilés selon une direction longitudinale d'empilement, en queue une bobine électromagnétique et en tête un élément d'auto-arrimage, configuré pour s'auto-arrimer à une face correspondante 24, 32, 34 du débris 4. L'auto-arrimage des magnéto-coupleurs 8, 10, 12 est mis en oeuvre par leur élément d'auto-arrimage respectif sous l'action des quantités de mouvement des magnéto-coupleurs imprimées par le dispositif de lancement 14.

Chaque magnéto-coupleur 8, 10, 12 comporte une tige ferromagnétique de forme cylindrique sur laquelle est enroulée sa bobine électromagnétique.

Chaque magnéto-coupleur 8, 10, 12 comporte un récepteur de commandes radiofréquences RF différent et un générateur d'impulsions de courant, positives ou négatives, branché sur sa batterie d'alimentation. La largeur et la polarité des impulsions de courant sont modulées en fonction des commandes radiofréquences RF reçues. Par exemple, le générateur d'impulsions est un commutateur commandable à trois états, un premier état de passage du courant, un deuxième état de passage de courant dans l'autre sens, un troisième état de coupure ou d'extinction courant.

Chaque récepteur radiofréquence comporte une chaine d'amplification radiofréquence différente et un démodulateur différent.

L'au moins modulateur de l'au moins émetteur et les démodulateurs utilisent une modulation numérique robuste multi-états, ici par exemple à deux états.

La bande de fréquences du signal de commande radiofréquence est une bande de fréquence comprise dans l'ensemble des bandes VHF et UHF.

Suivant les Figures 1 et 2, seuls des éléments formant le magnéto-coupleur 8 sont représentés. Ainsi, le magnéto-coupleur 8 comporte, fixés entre eux, en queue une tige ferromagnétique 52 de forme cylindrique allongée sur laquelle est enroulée sa bobine électromagnétique 54 et en tête un élément d'auto-arrimage 56, ici une tête de harpon.

De manière générale, l'élément d'auto-arrimage est un élément compris dans l'ensemble formé par les éléments autoadhésifs, les éléments de type pinces, et les éléments de type harpons.

La tige du magnéto-coupleur 8 comporte une cavité 60 pour recevoir et abriter une batterie d'alimentation électrique 62, un récepteur radiofréquence RF de commandes 64 et un générateur d'impulsions de courant 66.

La batterie d'alimentation électrique 62, le récepteur radiofréquence RF de commandes 64 et le générateur d'impulsions de courant 66 font partie du magnéto-coupleur 8.

Suivant la Figure 2 qui décrit de manière plus détaillée que la Figure 1 l'architecture du magnéto-coupleur 8, le magnéto-coupleur 8 comporte en outre un absorbeur de choc 70 divisé en deux parties 72, 74 disposées longitudinalement de part et d'autre de la tige ferromagnétique 52, à l'extrémité de queue du magnéto-coupleur 8, et entre l'extrémité de tête de la tige ferromagnétique 52 et l'élément d'auto-arrimage 56.

Les deux magnéto-coupleurs 10, 12 possèdent une structure identique à celle du magnéto-coupleur 8 décrite dans la Figure 2.

Suivant la Figure 3 et un deuxième mode de réalisation, un système de réduction de vitesses angulaires 102 comporte à l'instar du système 2 de la Figure 1, un engin spatial chasseur 106, trois magnéto-coupleurs 108, 110, 112, un dispositif de lancement 114 des magnéto-coupleurs 108, 110, 112 vers le débris spatial 4, le dispositif d'observation 16 des mouvements angulaires et d'estimation de l'attitude et des vitesses angulaires du débris spatial 4, l'ensemble de magnétomètres 18 montés sur l'engin chasseur 106 pour estimer le champ magnétique terrestre, le module 20 d'élaboration de commandes de réduction des vitesses angulaires du débris 4 à faire exécuter par le ou les magnéto-coupleurs 108, 110, 112, et l'au moins un émetteur 22 de commandes radiofréquences RF destinées aux magnéto-coupleurs 108, 110, 112.

Le système de réduction de vitesses angulaires 102 diffère du système de réduction de vitesses angulaires 2 en ce que les trois magnéto-coupleurs 108, 110, 112 sont intégrés en un module électromagnétique 120 au travers d'une structure porteuse ou carter 122 de forme extérieure cylindrique, et partagent au sein dudit module électromagnétique 120 un unique élément d'auto-arrimage 124. L'élément d'auto-arrimage 124 est un disque ayant une surface de tête recouverte par un matériau auto-adhésif, ici de type Gecko.

Les magnéto-coupleurs 108, 110, 112 de forme allongée comportent chacun une bobine électromagnétique 126, 128, 130, enroulée autour d'une tige ferromagnétique 132, 134, 136 pour canaliser les lignes du champ magnétique généré par la bobine associée 126, 128, 130.

Les bobines électromagnétiques 126, 128, 130 sont agencées suivant un trièdre ayant trois axes désignés respectivement par X, Y, Z. Les axes X, Y, Z sont ici mutuellement orthogonaux et traversent longitudinalement et respectivement les bobines 126, 128, 130.

Ici, les trois magnéto-coupleurs 108, 110, 112 partagent une même batterie d'alimentation électrique 142, partagent un même absorbeur de choc 144, et un même un récepteur 146 de commandes radiofréquences RF.

Chaque magnéto-coupleur 108, 110, 112 comporte un générateur d'impulsions de courant différent 158, 160, 162, branché sur la batterie d'alimentation 142 commune, la largeur et/ou la fréquence et la polarité des impulsions de courant étant modulées en fonction des commandes radiofréquences reçues par le récepteur RF 146 et attribué au magnéto-coupleur concerné au travers d'un schéma d'accès de communication prédéterminé.

Le système de réduction de vitesses angulaires 102 diffère également du système de réduction de vitesses angulaires 2 en ce que le dispositif de lancement 114 comporte un fût de canon adapté à la taille du module électromagnétique 120 et est dépourvu de barillet de chargement.

Suivant les Figures 4A-4B et un troisième mode de réalisation, dérivé du deuxième monde de réalisation 102 de la Figure 3, un système de réduction de vitesses angulaires 172 comporte à l'instar du système 102, un engin spatial chasseur 106 (non représenté sur les Figures 4A-4B), trois magnéto-coupleurs 178, 180, 182, un dispositif de lancement 114 des magnéto-coupleurs 178, 180, 112 vers le débris spatial 4, le dispositif d'observation 16 des mouvements angulaires et d'estimation de l'attitude et des vitesses angulaires du débris spatial 4, l'ensemble de magnétomètres 18 montés sur l'engin chasseur 106 pour estimer le champ magnétique terrestre, le module 20 d'élaboration de commandes de réduction des vitesses angulaires du débris 4 à faire exécuter par le ou les magnéto-coupleurs 172, 180, 182, et l'au moins un émetteur 22 de commandes radiofréquences RF destinées aux magnéto-coupleurs 178, 180, 182.

Le système de réduction de vitesses angulaires 172 diffère du système de réduction de vitesses angulaires 102 en ce que les trois magnéto-coupleurs 178, 180, 182 sont intégrés en un module électromagnétique 184 au travers d'une structure porteuse ou carter 186, et partagent au sein dudit module électromagnétique 184 un unique élément d'auto-arrimage 186 formé par un harpon, le module électromagnétique 184 étant configuré de sorte que les bobines électromagnétiques 188, 190, 192 des magnéto-coupleurs 178, 180, 182 sont agencées de manière parallèle et allongée dans le dispositif de lancement et lors du lancement dans une position gerbée (Figure 4A) et se déploient en trièdre au moment du choc avec le débris 4 sous l'action d'un mécanisme de déploiement (Figure 4B).

Les bobines électromagnétiques 188, 190, 192 sont chacune enroulées autour d'une tige ferromagnétique pour canaliser les lignes du champ magnétique généré par la bobine associée et intègrent chacune ici une batterie d'alimentation électrique différente, un absorbeur de choc différent, et un récepteur de commandes radiofréquences RF différent à l'instar des magnéto-coupleurs du système 2 des Figures 1 et 2.

En variante du système 172 des Figures 4A-4B, les magnéto-coupleurs partagent une même batterie d'alimentation électrique, un absorbeur de choc, et un même récepteur de commandes radiofréquences RF à l'instar des magnéto-coupleurs du système 102 de la Figure 3.

Suivant la Figure 5 et une phase du lancement de magnéto-coupleurs mise en oeuvre par le système 2 de réduction de vitesses angulaire de la Figure 1, le magnéto-coupleur 8, lancé depuis le satellite chasseur 6 par le dispositif de lancement 14, poursuit rapidement une trajectoire de lancement vers la face 24 du satellite cible 4 formant le débris spatial. Les deux magnéto-coupleurs 10, 12 sont déjà amarrés respectivement sur les faces 34, 32 du satellite cible.

Suivant la Figure 6, une phase d'un lancement séparé de trois magnéto-coupleurs 8, 10, 12 est mise en oeuvre par un troisième mode de réalisation d'un système de réduction de vitesses angulaires 202, dérivé du système 2 de réduction de vitesses angulaires de la Figure 1.

Le système de réduction de vitesses angulaires 202 diffère du système 2 de la Figure 1 en ce que les magnéto-coupleurs 8, 10, 12 sont attachés chacun lors de leur lancement à l'engin chasseur 6 par une longe différente 208, 210, 212, flexible et de faible masse. Les longes 208, 210, 212 sont détachables de l'engin chasseur 6 après auto-arrimage des magnéto-coupleurs 8, 10, 12 au débris spatial 4.

Ici, les magnéto-coupleurs 10, 12 sont déjà arrimés au satellite cible 4 et leurs longes 210, 212 sont détachées du satellite chasseur 6. Le magnéto-coupleur 8 en cours de lancement est attaché au satellite chasseur 4 par sa longe 208 et lui reste attaché tant que l'arrimage au débris 6 n'a pas eu lieu. Cela permet d'éviter la création d'un nouveau débris non contrôlé.

Suivant la Figure 7, un procédé de réduction de vitesses angulaires 302 d'un débris spatial, mis en oeuvre par exemple par le système spatial de la Figure 1, comprend un ensemble d'étapes.

Dans une première étape 304, l'engin chasseur est placé suffisamment distant du débris spatial 4 pour lui éviter d'entrer en collision avec ce dernier et lui permettre une visée d'au moins une des faces de grande taille du débris 4 pour lui attacher un ou plusieurs magnéto-coupleurs.

Puis dans une deuxième étape 306, le ou les magnéto-coupleurs sont lancés par le dispositif de lancement depuis l'engin chasseur 6 vers le débris spatial 4, en les guidant le long du ou des fûts de canon lanceur après la création de la ou des impulsions initiales.

Ensuite dans une troisième étape 308, le ou les magnéto-coupleurs sont auto-arrimés à une face du débris 4 par l'au moins un élément d'auto-arrimage sous l'action de la ou des quantités de mouvement du ou des magnéto-coupleurs imprimées par le dispositif de lancement.

Puis dans une quatrième étape 310, le ou les magnéto-coupleurs génèrent un ou plusieurs champs magnétiques de couplage au champ magnétique terrestre, le ou les champs magnétiques de couplage étant modulées suivant une loi de commandes transmises au travers d'une liaison radiofréquence, la loi de commande étant élaborée à partir d'une estimation du champ magnétique terrestre Bt et d'une estimation de l'attitude et des vitesses angulaires du débris effectuées au niveau du satellite chasseur.

Suivant les Figures 8 et 9, des résultats de simulation par ordinateur d'un contrôle de la réduction de vitesses angulaires typiques, mis en oeuvre par un système 2 tel que décrit dans les Figures 1 et 2 et pré-dimensionné de manière concrète avec des éléments réalisables actuellement, sont présentés.

Ces résultats permettent d'établir un dimensionnement préliminaire de la batterie nécessaire à l'alimentation des magnéto-coupleurs utilisés pour le freinage de la rotation du débris.

Le temps nécessaire au freinage du débris est évalué par la simulation des effets observés sur les vitesses angulaires du débris par l'application d'une loi de contrôle prédéterminée.

La simulation est fondée sur les hypothèses suivantes :

- Orbite décrite par le débris 680km, inclinaison 98° ;
- Matrice d'Inertie du débris: [1400 50 -20 ; 50 1100 -20 ; -20 - 20 2200] kg.m$^2$ ;
- Vitesse angulaire initiale du débris : [0.05 0.05 0.05] rad/s ;
- Trois magnéto-coupleurs montés orthogonalement sur le débris (selon trois axes mutuellement orthogonaux X, Y et Z) ayant chacun un moment magnétique maximal (Mmax) égal à 180 A.m$^2$ ;
- La loi de contrôle ou commande suppose qu'on estime l'attitude et les vitesses angulaires du débris, par exemple avec une caméra montée sur le satellite chasseur, et qu'on estime le champ magnétique à l'aide de magnétomètres montés sur l'engin chasseur.

La loi de commande testée est de type :

$$M_x = M_{max} * sign(\omega^\wedge Bt)_x$$

$$M_y = M_{max} * sign(\omega^\wedge Bt)_y$$

$$M_z = M_{max} * sign(\omega^\wedge Bt)_z$$

dans laquelle :

$(M_x, M_y, M_z)$ désignent les composantes dans le repère (X, Y, Z) du moment magnétique de commande ;

$(\omega^\wedge Bt)_x$, $(\omega^\wedge Bt)_y$, $(\omega^\wedge Bt)_z$ désignent les composantes dans le repère (X, Y, Z) du vecteur $(\omega^\wedge Bt)$, produit vectoriel de la vitesse de rotation instantanée $\omega$ du débris 4 et du champ magnétique terrestre Bt, estimés par le satellite chasseur 6 à l'aide respectivement de la caméra et des magnétomètres ;

Sign(.) désigne la fonction signe ;

$M_{max}$ désigne le moment magnétique maximal égal à 180 A.m$^2$, pouvant être appliqué à chaque magnéto-coupleur.

Suivant la Figure 8, les évolutions temporelles des composantes en X, Y, Z de la vitesse angulaire du débris dans le repère du satellite chasseur sont décrites respectivement par une première courbe 412, une deuxième courbe 414, et une troisième courbe 416.

Suivant la Figure 9, les évolutions temporelles des trois moments magnétiques $M_x$ , $M_y$, $M_z$, effectivement appliqués selon les axes X, Y, Z du satellite cible et générés par les magnéto-coupleurs 8, 10, 12 du système 2 sont décrites par une quatrième courbe 422, une cinquième courbe 424, et une sixième courbe 426.

Le moment magnétique commandé sur chaque magnéto-coupleur 8, 10 et 12 est limité aux trois valeurs: -Mmax, 0 ou Mmax.

Les vitesses angulaires $\omega_x$, $\omega_y$, $\omega_z$ selon les axes X, Y et Z, initialement mises autour de 3 degrés/s sont réduites à moins de 0,2 degrés/s en environ 25000 secondes, c'est dire 7 heures.

En réalité, la durée réelle d'activation de chaque magnéto-coupleur est inférieure à 25000 secondes lorsqu'on enlève les temps où la commande est nulle.

Suivant la Figure 10, l'évolution temporelle des durées cumulées d'activation (-Mmax ou +Mmax commandés) de chaque magnéto-coupleur est représenté par une septième courbe 432 pour le magnéto-coupleur de moment magnétique 8 orienté selon l'axe X, par une huitième courbe 434 pour le magnéto-coupleur 10 de moment magnétique orienté selon l'axe Y, et par une neuvième courbe 436 pour le magnéto-coupleur 12 de moment magnétique 12 orienté selon l'axe Z.

Il apparait que la durée réelle d'activation d'un magnéto-coupleur est au maximum de 17000 secondes, c'est-à-dire 4,7 heures.

D'autre part, les données techniques disponibles auprès des équipementiers fournisseurs de magnéto-coupleurs montrent qu'un magnéto-coupleur capable de générer un moment magnétique de 180 A.m$^2$ pèse environ 2.5 kg et consomme 7.3W pour un moment magnétique fourni égal à Mmax. L'énergie nécessaire à l'alimentation est donc de: 7.3x4.7 = 34Wh.

Par analogie avec les batteries actuellement produites, il est possible d'estimer la masse et le volume de la batterie. En effet, une batterie classique de 720Wh pesant 7.2 kg et occupant 6.7dm$^3$, la fourniture d'une énergie de 34 Wh correspondrait donc à une batterie de 0.34 kg et de volume 0.32 dm$^3$.

**Revendications**

1. Système spatial de réduction de vitesses angulaires d'un débris spatial (4), le système spatial comprenant

   .- un engin spatial chasseur (6), configuré pour être placé suffisamment distant du débris spatial (6) pour éviter d'entrer en collision avec ce dernier et permettre une visée d'au moins une de ses faces de grande taille pour lui attacher un ou plusieurs magnéto-coupleurs,
   .- au moins un ou plusieurs magnéto-coupleurs (8, 10, 12 ; 108, 110, 112 ; 178, 180, 182) configurés pour être lancés depuis l'engin chasseur (6) vers le débris spatial (4) et générer sur commande après leur arrimage au débris spatial (4) un ou plusieurs champs magnétiques de couplage au champ magnétique terrestre ;

   **Caractérisé en ce que** le système spatial comporte

   .- un dispositif de lancement par impulsion (14 ; 114) du ou des magnéto-coupleurs de l'engin spatial vers le débris spatial (4), le dispositif de lancement (14 ; 114) étant fixé à l'engin chasseur (6) et incluant au moins un fût de canon lanceur (40) pour guider le ou les magnéto-coupleurs (8, 10, 12 ; 108, 110, 112 ; 178, 180, 182) vers le débris spatial (4), et
   .- le ou les magnéto-coupleurs (8, 10, 12 ; 108, 110, 112 ; 178, 180, 182) comportent chacun une bobine électromagnétique (54 ; 126, 128, 130 ; 188, 190, 192) et au moins un élément d'auto-arrimage (56 ; 124) à une face du débris (4) sous l'action de la ou des quantités de mouvement du ou des magnéto-coupleurs (8, 10, 12 ; 108, 110, 112 ; 178, 180, 182) imprimées par le dispositif de lancement (14 ; 114).

2. Système spatial de réduction des vitesses angulaires d'un débris spatial selon la revendication 1, dans lequel

chaque magnéto-coupleur (8, 10, 12) est configuré pour être lancé séparément depuis l'engin chasseur (6) et arrimé séparément au débris spatial (4), ou
au moins deux magnéto-coupleurs (108, 110, 112 ; 178, 180, 182) sont intégrés en un module électromagnétique (120) et partagent au sein du module électromagnétique (120 ; 184) un ou plusieurs éléments d'auto-arrimage (56 ; 124 ; 186).

3. Système spatial de réduction des vitesses angulaires d'un débris spatial selon la revendication 2, dans lequel lorsqu'au moins deux magnéto-coupleurs (108, 110, 112; 178, 180, 182) sont intégrés en un module électromagnétique (120 ; 184),

.- les au-moins deux magnéto-coupleurs (108, 110, 112) sont pré-déployés avant leur lancement, ou
.- les au moins deux magnéto-coupleurs (178, 180, 182) sont serrés parallèlement les uns contre les autres de manière compacte dans une position de gerbage lors de leur lancement et déployés en dièdre ou polyèdre sous l'action d'un mécanisme de déploiement lors de leur arrimage au débris.

4. Système spatial de réduction des vitesses angulaires d'un débris spatial selon l'une quelconque des revendications 2 à 3, dans lequel
le dispositif de lancement (14 ; 114) comporte un fût unique de canon adapté à la taille d'un magnéto-coupleur (8, 10, 12) ou la taille du module électromagnétique (120 ; 184), et
un barillet de chargement des magnéto-coupleurs lorsque il est prévu de lancer et d'arrimer séparément chaque magnéto-coupleur (8, 10, 12).

5. Système spatial de réduction des vitesses angulaires d'un débris spatial selon l'une quelconque des revendications 1 à 4, dans lequel
l'élément d'auto-arrimage (56 ; 124 ; 186) est un élément compris dans l'ensemble formé par les éléments autoadhésifs, les éléments de type pinces, et les éléments de type harpons.

6. Système spatial de réduction des vitesses angulaires d'un débris spatial selon l'une quelconque des revendications 1 à 5, dans lequel

.- lorsque les magnéto-coupleurs (8, 10, 12) sont configurés pour être lancés et arrimés séparément, chaque magnéto-coupleur comporte une batterie d'alimentation électrique (62) différente, ou
.- lorsqu'au moins deux magnéto-coupleurs (108, 110, 112) sont intégrés en un module électromagnétique (120), les au moins deux magnéto-coupleurs (108, 110, 112) peuvent partager une même batterie d'alimentation électrique (142) au sein du module électromagnétique (120).

7. Système spatial de réduction des vitesses angulaires d'un débris spatial selon l'une quelconque des revendications 1 à 6, dans lequel
chaque magnéto-coupleur (8, 10, 12) comporte un absorbeur de choc (70) différent lorsque les magnéto-coupleurs (8, 10, 12) sont configurés pour être lancés et arrimés séparément, ou
lorsqu'au moins deux magnéto-coupleurs (108, 110, 112) sont intégrés en un module électromagnétique (120), les au moins deux magnéto-coupleurs (108, 110, 112) partagent un même absorbeur de choc (144) au sein du module électromagnétique (120).

8. Système spatial de réduction de vitesses angulaires d'un débris spatial selon l'une quelconque des revendications 6 à 7, dans lequel
Chaque magnéto-coupleur (8, 10, 12) comporte un récepteur de commandes radiofréquences RF différent (66) et un générateur d'impulsions de courant différent (64) branché sur sa batterie d'alimentation (62), la largeur et la polarité des impulsions de courant étant modulées en fonction des commandes radiofréquences RF reçues lorsque les magnéto-coupleurs (8, 10, 12) sont configurés pour être lancés et arrimés séparément; ou
lorsqu'au moins deux magnéto-coupleurs (108, 110, 112) sont intégrés en un module électromagnétique (120), les au moins deux magnéto-coupleurs(108, 110, 112) partagent un même récepteur de commandes radiofréquences RF (146) au sein du module électromagnétique (120) et comportent chacun un générateur d'impulsions de courant différent (158, 160, 162) branché sur la batterie d'alimentation commune (142), la largeur et la polarité des impulsions de courant étant modulées en fonction de commandes radiofréquences différentes reçues par le récepteur RF commun (146).

9. Système spatial de réduction de vitesses angulaires d'un débris spatial selon la revendication 8, comprenant en outre
au moins un émetteur (22) de commandes radiofréquences RF destinées à l'au moins un récepteur de commandes radioélectriques RF, l'au moins un émetteur (22) étant embarqué à bord de l'engin chasseur (6).

**10.** Système spatial de réduction de vitesses angulaires d'un débris spatial selon l'une quelconque des revendications 8 à 9, dans lequel

Chaque émetteur radiofréquence(22) comporte un modulateur de signal radiofréquence et une chaine d'amplification radiofréquence d'émission, et

Chaque récepteur radiofréquence comporte une chaine d'amplification radiofréquence et un démodulateur, et

Les modulateurs et démodulateurs utilisent une modulation numérique robuste multi-états, de préférence à deux états

**11.** Système spatial de réduction de vitesses angulaires d'un débris spatial selon la revendication 10, dans lequel

La bande de fréquences du signal de commande radiofréquence est une bande de fréquence comprise dans l'ensemble des bandes VHF et UHF.

**12.** Système spatial de réduction de vitesses angulaires d'un débris spatial selon l'une quelconque des revendications 1 à 11, dans lequel

chaque magnéto-coupleur (8, 10, 12 ; 108, 110, 112 ; 178, 180, 182) comporte une tige ferromagnétique (52 ; 132, 134, 136) de forme cylindrique sur laquelle est enroulée une bobine électromagnétique (54 ; 126, 128, 130).

**13.** Système spatial de réduction de vitesses angulaires d'un débris spatial selon la revendication 12, dans lequel

lorsque les magnéto-coupleurs (8, 10, 12) sont configurés pour être lancés et arrimés séparément,

la tige de chaque magnéto-coupleur comporte une ou plusieurs cavités pour recevoir et abriter une batterie d'alimentation électrique et/ou un récepteur radiofréquence de commandes et/ou un générateur d'impulsions de courant, et/ou

Chaque magnéto-coupleur comporte un absorbeur de choc disposé longitudinalement de part et d'autre de sa tige ferromagnétique.

**14.** Système spatial de réduction de vitesses angulaires d'un débris spatial selon l'une quelconque des revendications 1 à 13, dans lequel le ou les magnéto-coupleurs (8, 10, 12) ou le module électromagnétique sont attachées lors de leur lancement à l'engin chasseur par au moins une longe flexible et de faible masse, la ou les longes étant détachables de l'engin chasseur après auto-arrimage du ou des magnéto-coupleurs au débris spatial.

**15.** Système spatial de réduction des vitesses angulaires d'un débris spatial selon l'une quelconque des revendications 1 à 14, comprenant en outre

Un dispositif (16) d'observation des mouvements angulaires et d'estimation de l'attitude et des vitesses angulaires du débris, et

Un ensemble de magnétomètres (18) montés sur l'engin chasseur (6) pour estimer le champ magnétique terrestre Bt,

Un module (20) d'élaboration de commandes de réduction des vitesses angulaires du débris à partir des vitesses angulaires estimées du débris et du champ magnétique terrestre estimé.

**16.** Procédé de réduction de vitesses angulaires d'un débris spatial mis en oeuvre par un système spatial comprenant

.- un engin spatial chasseur (6),

.- au moins un ou plusieurs magnéto-coupleurs (8, 10, 12 ; 108, 110, 112) comportant chacun une bobine électromagnétique différente (54 ; 126, 128, 130) et au moins un élément d'auto-arrimage (56 ; 124),

.- un dispositif de lancement par impulsion (14 ; 114) du ou des magnéto-coupleurs, embarqué à bord du et fixé à l'engin chasseur, le dispositif de lancement incluant au moins un fût de canon lanceur pour guider le ou les magnéto-coupleurs ;

ledit procédé comprenant les étapes consistant à :

.- placer (304) l'engin chasseur suffisamment distant du débris spatial pour lui éviter d'entrer en collision avec ce dernier et lui permettre une visée d'au moins une des faces de grande taille du débris pour lui attacher un ou plusieurs magnéto-coupleurs ;

.- lancer (306) le ou les magnéto-coupleurs par le dispositif de lancement depuis l'engin chasseur vers le débris spatial, en les guidant le long du ou des fûts de canon lanceur après la création de la ou des impulsions initiales ;

.- auto-arrimer (308) le ou les magnéto-coupleurs à une face du débris par l'au moins un élément d'auto-arrimage sous l'action de la ou des quantités de mouvement du ou des magnéto-coupleurs imprimées par le dispositif de lancement ;

.- faire générer (310) par le ou les magnéto-coupleurs un ou plusieurs champs magnétiques de couplage au champ magnétique terrestre, le ou les champs magnétiques de couplage étant modulés suivant une loi de commandes transmises au travers d'une liaison radiofréquence, la loi de commande étant élaborée à partir d'une estimation du champ magnétique terrestre et d'une estimation de l'attitude et des vitesses angulaires du débris effectuées au niveau du satellite chasseur.

**Patentansprüche**

1. Weltraumsystem zur Reduzierung der Winkelgeschwindigkeiten von Weltraummüll (4), das Weltraumsystem enthaltend

   - ein Weltraumfanggerät (6), das konfiguriert ist, um ausreichend entfernt vom Weltraummüll (4) platziert zu werden, um eine Kollision mit diesem Müll zu vermeiden und ihm ein Anvisieren von mindestens einer seiner großen Seiten zu ermöglichen, um daran einen oder mehrere Magnettorquer zu befestigen,
   - mindestens ein oder mehrere Magnettorquer (8, 10, 12; 108, 110, 112; 178, 180, 182), die konfiguriert sind, um vom Fanggerät (6) zum Weltraummüll (4) abgeschossen zu werden und um auf Befehl nach ihrer Ankopplung an den Weltraummüll (4) ein oder mehrere Kopplungsmagnetfelder an das Erdmagnetfeld zu erzeugen;

   **dadurch gekennzeichnet, dass** das Weltraumsystem folgendes umfasst

   - eine Abschussvorrichtung durch Impuls (14; 114) des oder der Magnettorquer des Weltraumgeräts zum Weltraummüll (4), wobei die Abschussvorrichtung (14; 114) am Fanggerät (6) befestigt ist und mindestens ein Abschusskanonenrohr (40) umfasst, um den oder die Magnettorquer (8, 10, 12; 108, 110, 112; 178, 180, 182) zum Weltraummüll (4) zu führen, und
   - wobei der oder die Magnettorquer (8, 10, 12; 108, 110, 112; 178, 180, 182) jeweils eine elektromagnetische Spule (54; 126, 128, 130; 188, 190, 192) und mindestens ein automatisches Kopplungselement (56; 124) an eine Seite des Mülls (4) unter der Wirkung der Bewegungsmenge(n) des oder der Magnettorquer (8, 10, 12; 108, 110, 112; 178, 180, 182), die durch die Abschussvorrichtung (14; 114) vorgegeben werden, umfassen.

2. Weltraumsystem zur Reduzierung der Winkelgeschwindigkeiten von Weltraummüll nach Anspruch 1, wobei
   jeder Magnettorquer (8, 10, 12) konfiguriert ist, um separat vom Fanggerät (6) abgeschossen und separat an den Weltraummüll (4) gekoppelt zu werden, oder
   mindestens zwei Magnettorquer (108, 110, 112; 178, 180, 182) in ein elektromagnetisches Modul (120) integriert sind und sich in dem elektromagnetischen Modul (120; 184) ein oder mehrere automatische Kopplungselemente (56; 124; 186) teilen.

3. Weltraumsystem zur Reduzierung der Winkelgeschwindigkeiten von Weltraummüll nach Anspruch 2, wobei, wenn mindestens zwei Magnettorquer (108, 110, 112; 178, 180, 182) in ein elektromagnetisches Modul (120; 184) integriert sind,

   - die mindestens zwei Magnettorquer (108, 110, 112) vor ihrem Abschuss vorentfaltet werden, oder
   - die mindestens zwei Magnettorquer (178, 180, 182) bei ihrem Abschuss parallel zueinander kompakt in einer Stapelungsposition eingespannt sind und bei ihrer Kopplung an den Müll unter der Wirkung eines Entfaltungsmechanismus dieder- oder polyederförmig entfaltet werden.

4. Weltraumsystem zur Reduzierung der Winkelgeschwindigkeiten von Weltraummüll nach einem der Ansprüche 2 bis 3, wobei
   die Abschussvorrichtung (14; 114) ein einzelnes Kanonenrohr umfasst, das an die Größe eines Magnettorquers (8, 10, 12) oder an die Größe des elektromagnetischen Moduls (120; 184) angepasst ist, und einen Ladezylinder der Magnettorquer, wenn es vorgesehen ist, jeden Magnettorquer (8, 10, 12) separat abzuschießen und zu koppeln.

5. Weltraumsystem zur Reduzierung der Winkelgeschwindigkeiten von Weltraummüll nach einem der Ansprüche 1 bis 4, wobei
   das automatische Kopplungselement (56; 124; 186) ein Element ist, das in der Einheit enthalten ist, gebildet aus den selbstklebenden Elementen, den Elementen vom Typ Klammern und den Elementen vom Typ Harpunen.

6. Weltraumsystem zur Reduzierung der Winkelgeschwindigkeiten von Weltraummüll nach einem der Ansprüche 1 bis 5, wobei

   - wenn die Magnettorquer (8, 10, 12) konfiguriert sind, um separat abgeschossen und gekoppelt zu werden, jeder Magnettorquer eine verschiedene Stromversorgungsbatterie (62) umfasst, oder
   - wenn mindestens zwei Magnettorquer (108, 110, 112) in ein elektromagnetisches Modul (120) integriert sind, die mindestens zwei Magnettorquer (108, 110, 112) sich ein und dieselbe Stromversorgungsbatterie (142) im elektromagnetischen Modul (120) teilen können.

7. Weltraumsystem zur Reduzierung der Winkelgeschwindigkeiten von Weltraummüll nach einem der Ansprüche 1 bis 6, wobei
   jeder Magnettorquer (8, 10, 12) einen verschiedenen Aufpralldämpfer (70) umfasst, wenn die Magnettorquer (8, 10, 12) konfiguriert sind, um separat abgeschossen und gekoppelt zu werden, oder
wenn mindestens zwei Magnettorquer (108, 110, 112) in ein elektromagnetisches Modul (120) integriert sind, sich die mindestens zwei Magnettorquer (108, 110, 112) ein und denselben Aufpralldämpfer (144) im elektromagnetischen Modul (120) teilen.

8. Weltraumsystem zur Reduzierung der Winkelgeschwindigkeiten von Weltraummüll nach einem der Ansprüche 6 bis 7, wobei
jeder Magnettorquer (8, 10, 12) einen verschiedenen Empfänger für Funkfrequenzbefehle (RF-Befehle) (66) und einen verschiedenen Stromimpulsgenerator (64), der an seiner Versorgungsbatterie (62) angeschlossen ist, umfasst, wobei die Länge und Polarität der Impulse in Abhängigkeit von den empfangenen Funkfrequenzbefehlen (RF-Befehlen) moduliert werden, wenn die Magnettorquer (8, 10, 12) konfiguriert sind, um separat abgeschossen und gekoppelt zu werden; oder
wenn mindestens zwei Magnettorquer (108, 110, 112) in ein elektromagnetisches Modul (120) integriert sind, sich die mindestens zwei Magnettorquer (108, 110, 112) ein und denselben Empfänger für Funkfrequenzbefehle (RF-Befehle) (146) im elektromagnetischen Modul (120) teilen und jeweils einen verschiedenen Stromimpulsgenerator (158, 160, 162) umfassen, der an der gemeinsamen Versorgungsbatterie (142) angeschlossen ist, wobei die Länge und Polarität der Stromimpulse in Abhängigkeit von den verschiedenen Funkfrequenzbefehlen moduliert werden, die von dem gemeinsamen RF-Empfänger (146) empfangen werden.

9. Weltraumsystem zur Reduzierung der Winkelgeschwindigkeiten von Weltraummüll nach Anspruch 8, das u. a. folgendes enthält
mindestens einen Sender (22) für Funkfrequenzbefehle (RF-Befehle), der für den mindestens einen Empfänger für Funkfrequenzbefehle (RF-Befehle) bestimmt ist, wobei der mindestens eine Sender (22) an Bord des Fanggeräts (6) ist.

10. Weltraumsystem zur Reduzierung der Winkelgeschwindigkeiten von Weltraummüll nach einem der Ansprüche 8 bis 9, wobei
jeder Funkfrequenzsender (22) einen Modulator des Funkfrequenzsignals und eine Verstärkungskette der emittierten Funkfrequenz umfasst, und
jeder Funkfrequenzempfänger eine Verstärkungskette der Verstärkungskette der Funkfrequenz und einen Demodulator umfasst, und
die Modulatoren und Demodulatoren eine robuste digitale Modulation mit vielfachen Zuständen verwenden, vorzugsweise mit zwei Zuständen.

11. Weltraumsystem zur Reduzierung der Winkelgeschwindigkeiten von Weltraummüll nach Anspruch 10, wobei
das Frequenzband des Funkfrequenzbefehlssignals ein Frequenzband ist, das in der Einheit der VHF- und UHF-Bänder enthalten ist.

12. Weltraumsystem zur Reduzierung der Winkelgeschwindigkeiten von Weltraummüll nach einem der Ansprüche 1 bis 11, wobei
jeder Magnettorquer (8, 10, 12; 108, 110, 112; 178, 180, 182) eine ferromagnetische Stange (52; 132, 134, 136) zylindrischer Form umfasst, auf der eine elektromagnetische Spule (54; 126, 128, 130) aufgewickelt ist.

13. Weltraumsystem zur Reduzierung der Winkelgeschwindigkeiten von Weltraummüll nach Anspruch 12, wobei
wenn die Magnettorquer (8, 10, 12) konfiguriert sind, um separat abgeschossen und gekoppelt zu werden,
die Stange von jedem Magnettorquer einen oder mehrere Hohlräume umfasst, um eine Stromversorgungsbatterie und/oder einen Empfänger für Funkfrequenzbefehle und/oder einen Stromimpulsgenerator aufzunehmen und zu schützen, und/oder
jeder Magnettorquer einen Aufpralldämpfer umfasst, der in Längsrichtung auf beiden Seiten seiner ferromagnetischen Stange angeordnet ist.

14. Weltraumsystem zur Reduzierung der Winkelgeschwindigkeiten von Weltraummüll nach einem der Ansprüche 1 bis 13, wobei der oder die Magnettorquer (8, 10, 12) oder das elektromagnetische Modul bei ihrem Abschuss durch mindestens eine flexible Leine geringer Masse am Fanggerät befestigt sind, wobei die Leine(n) nach einer automatischen Kopplung des oder der Magnettorquer an den Weltraummüll vom Fanggerät abnehmbar sind.

15. Weltraumsystem zur Reduzierung der Winkelgeschwindigkeiten von Weltraummüll nach einem der Ansprüche 1 bis 14, das u. a. folgendes enthält
eine Vorrichtung (16) zur Beobachtung der Winkelbewegungen und Schätzung der Lage und der Winkelgeschwindigkeiten des Mülls, und
eine Magnetometer-Einheit (18), die am Fanggerät (6) montiert ist, um das Erdmagnetfeld Bt zu schätzen,
ein Modul (20) zur Erstellung von Befehlen zur Reduzierung der Winkelgeschwindigkeiten des Mülls anhand der geschätzten Winkelgeschwindigkeiten des Mülls und des geschätzten Erdmagnetfelds.

16. Verfahren zur Reduzierung der Winkelgeschwindigkeiten von Weltraummüll, das durch ein Weltraumsystem umgesetzt wird, das folgendes enthält

   - ein Weltraumfanggerät (6),

- mindestens ein oder mehrere Magnettorquer (8, 10, 12; 108, 110, 112), die jeweils eine verschiedene elektromagnetische Spule (54; 126, 128, 130) und mindestens ein automatisches Kopplungselement (56; 124) umfassen,
- eine Abschussvorrichtung durch Impuls (14; 114) des oder der Magnettorquer, die an Bord des Fanggeräts sind und daran befestigt sind, wobei die Abschussvorrichtung mindestens ein Abschusskanonenrohr zum Führen des oder der Magnettorquer enthält;

wobei das Verfahren die folgenden Schritte umfasst, bestehend aus:

- Platzieren (304) des Fanggeräts ausreichend entfernt vom Weltraummüll, um seine Kollision mit diesem Müll zu vermeiden und ihm ein Anvisieren von mindestens einer der großen Seiten des Mülls zu ermöglichen, damit es daran einen oder mehrere Magnettorquer befestigt;
- Abschießen (306) des oder der Magnettorquer durch die Abschussvorrichtung vom Fanggerät zum Weltraummüll, wobei sie entlang des oder der Kanonenrohre nach Erzeugen des oder der anfänglichen Impulse geführt werden;
- automatisches Koppeln (308) des oder der Magnettorquer an einer Seite des Mülls durch das mindestens eine automatische Kopplungselement unter der Wirkung der Bewegungsmenge(n) des oder der Magnettorquer, die durch die Abschussvorrichtung vorgegeben werden;
- Veranlassen der Erzeugung (310) durch den oder die Magnettorquer eines oder mehrerer Kopplungsmagnetfelder an das Erdmagnetfeld, wobei das oder die Kopplungsmagnetfelder gemäß einer Steuerregel moduliert werden, die über eine Funkfrequenzverbindung übertragen wird, wobei die Steuerregel anhand einer Schätzung des Erdmagnetfelds und einer Schätzung der Lage und der Winkelgeschwindigkeiten des Mülls, die auf Ebene des Fangsatelliten durchgeführt werden, erstellt wird.

**Claims**

1. A space system for reducing the angular velocities of space debris (4), the space system comprising:

- a chaser spacecraft (6) configured to be placed far enough away from the space debris (4) to avoid colliding therewith and to allow sighting of at least one of its large faces so as to attach one or more magnetorquers thereto;
- at least one or more magnetorquers (8, 10, 12; 108, 110, 112; 178, 180, 182) configured to be launched from the chaser craft (6) towards the space debris (4) and to generate on command, after they are tethered to the space debris (4), one or more coupling magnetic fields with the geomagnetic field,

**characterised in that** the space system comprises:

- a device (14; 114) for pulse-launching the one or more magnetorquers from the spacecraft towards the space debris (4), the launch device (14; 114) being fixed to the chaser craft (6) and including at least one launch gun barrel (40) for guiding the one or more magnetorquers (8, 10, 12; 108, 110, 112; 178, 180, 182) towards the space debris (4); and
- the one or more magnetorquers (8, 10, 12; 108, 110, 112; 178, 180, 182) each comprising an electromagnetic winding (54; 126, 128, 130; 188, 190, 192) and at least one self-tethering element (56; 124) for tethering to a face of the debris (4) under the action of the momentum of the one or more magnetorquers (8, 10, 12; 108, 110, 112; 178, 180, 182) communicated by the launch device (14; 114).

2. The space system for reducing the angular velocities of space debris according to claim 1, wherein each magnetorquer (8, 10, 12) is configured to be individually launched from the chaser craft (6) and to be individually tethered to the space debris (4), or at least two magnetorquers (108, 110, 112; 178, 180, 182) are integrated into an electromagnetic module (120) and share one or more self-tethering elements (56; 124; 186) inside said electromagnetic module (120; 184).

3. The space system for reducing the angular velocities of space debris according to claim 2, wherein, when at least two magnetorquers (108, 110, 112; 178, 180, 182) are integrated into an electromagnetic module (120; 184),

- the at least two magnetorquers (108, 110, 112) are pre-deployed before they are launched; or
- the at least two magnetorquers (178, 180, 182) are compactly clamped in a stacked position parallel to each other when they are launched and are deployed as a dihedral or polyhedron under the action of a deployment mechanism when they are tethered to the debris.

4. The space system for reducing the angular velocities of space debris according to any one of claims 2 to 3, wherein the launch device (14; 114) comprises a single gun barrel adapted to the size of a magnetorquer (8, 10, 12) or to the size of the electromagnetic module (120; 184), and

a cylinder for loading magnetorquers when provision is made for each magnetorquer (8, 10, 12) to be individually launched and tethered.

5. The space system for reducing the angular velocities of space debris according to any one of claims 1 to 4, wherein
the self-tethering element (56; 124; 186) is an element included in the assembly formed by self-adhesive elements, clip type elements and harpoon type elements.

6. The space system for reducing the angular velocities of space debris according to any one of claims 1 to 5, wherein,

- when the magnetorquers (8, 10, 12) are configured to be individually launched and tethered, each magnetorquer comprises a different electric power supply battery (62) or,
- when at least two magnetorquers (108, 110, 112) are integrated into an electromagnetic module (120), the at least two magnetorquers (108, 110, 112) can share the same electric power supply battery (142) inside the electromagnetic module (120).

7. The space system for reducing the angular velocities of space debris according to any one of claims 1 to 6, wherein each magnetorquer (8, 10, 12) comprises a different shock absorber (70) when the magnetorquers (8, 10, 12) are configured to be individually launched and tethered or,
when at least two magnetorquers (108, 110, 112) are integrated into an electromagnetic module (120), the at least two magnetorquers (108, 110, 112) share the same shock absorber (144) inside the electromagnetic module (120).

8. The space system for reducing the angular velocities of space debris according to any one of claims 6 to 7, wherein
each magnetorquer (8, 10, 12) comprises a different radio frequency RF command receiver (66) and a different pulse current generator (64) connected to its power supply battery (62), the width and the polarity of the current pulses being modulated as a function of the radio frequency RF commands received when the magnetorquers (8, 10, 12) are configured to be individually launched and tethered or,
when at least two magnetorquers (108, 110, 112) are integrated into an electromagnetic module (120), the at least two magnetorquers (108, 110, 112) share the same radio frequency RF command receiver (146) inside the electromagnetic module (120) and each comprise a different current pulse generator (158, 160, 162) connected to the common power supply battery (142), the width and the polarity of the current pulses being modulated as a function of different radio frequency commands received by the common RF receiver (146).

9. The space system for reducing the angular velocities of space debris according to claim 8, further comprising
at least one radio frequency RF command transmitter (22) intended for the at least one radioelectric RF commands receiver, the at least one transmitter (22) being on board the chaser craft (6).

10. The space system for reducing the angular velocities of space debris according to any one of claims 8 to 9, wherein
each radio frequency transmitter (22) comprises a radio frequency signal modulator and a radio frequency transmission amplification chain, and
each radio frequency receiver comprises a radio frequency amplification chain and a demodulator, and the modulators and demodulators use a robust multiple-state, preferably two-state, digital modulation.

11. The space system for reducing the angular velocities of space debris according to claim 10, wherein
the frequency band of the radio frequency command signal is a frequency band included in the set of VHF and UHF bands.

12. The space system for reducing the angular velocities of space debris according to any one of claims 1 to 11, wherein
each magnetorquer (8, 10, 12; 108, 110, 112; 178, 180, 182) comprises a cylindrical shaped ferromagnetic rod (52; 132, 134, 136), on which an electromagnetic winding (54; 126, 128, 130) is wound.

13. The space system for reducing the angular velocities of space debris according to claim 12, wherein,
when the magnetorquers (8, 10, 12) are configured to be individually launched and tethered,
the rod of each magnetorquer comprises one or more cavities for receiving and housing an electric power supply battery and/or a radio frequency command receiver and/or a current pulse generator, and/or
each magnetorquer comprises a shock absorber disposed longitudinally on either side of its ferromagnetic rod.

14. The space system for reducing the angular velocities of space debris according to any one of claims 1 to 13, wherein, when they are launched, the one or more magnetorquers (8, 10, 12) or the electromagnetic module are attached to the chaser craft by at least one flexible and low mass tether, the one or more tethers being able to be detached from the chaser craft after the one or more magnetorquers is/are self-tethered to the space debris.

15. The space system for reducing the angular velocities of space debris according to any one of claims 1 to 14, further comprising
a device (16) for observing angular movements and for estimating the attitude and angular velocities of the debris; and
a set of magnetometers (18) mounted on the chaser craft (6) to estimate the geomagnetic field Bt;

a module (20) for generating commands for reducing the angular velocities of the debris on the basis of the estimated angular velocities of the debris and of the estimated geomagnetic field.

16. A method for reducing the angular velocities of space debris implemented by a space system comprising:

- a chaser spacecraft (6);
- at least one or more magnetorquers (8, 10, 12; 108, 110, 112) each comprising a different electromagnetic winding (54; 126, 128, 130) and at least one self-tethering element (56; 124);
- a device (14; 114) for pulse-launching the one or more magnetorquers on board and fixed to the chaser craft, the launch device including at least one launcher gun barrel for guiding the one or more magnetorquers;

said method comprising the following steps:

- placing (304) the chaser craft far enough away from the space debris to avoid colliding therewith and to allow it to sight at least one of the large faces of the debris so as to attach one or more magnetorquers thereto;
- launching (306) the one or more magnetorquers by the launch device from the chaser craft towards the space debris, by guiding them along the one or more barrels of the launcher gun following the creation of the one or more initial pulses;
- self-tethering (308) the one or more magnetorquers to a face of the debris by the at least one self-tethering element under the action of the momentum of the one or more magnetorquers communicated by the launch device;
- generating (310), by one or more magnetorquers, one or more coupling magnetic fields with the geomagnetic field, the one or more coupling magnetic fields being modulated according to a command rule transmitted through a radio frequency link, the command rule being generated on the basis of an estimate of the geomagnetic field and an estimate of the attitude and the angular velocities of the debris carried out on the chaser satellite.

FIG.1

FIG.2

FIG.3

EP 3 112 274 B1

FIG.4A

FIG.4B

**FIG.5**

**FIG.6**

302

```
┌─────────────────┐
│       304       │
└─────────────────┘
         │
         ▼
┌─────────────────┐
│       306       │
└─────────────────┘
         │
         ▼
┌─────────────────┐
│       308       │
└─────────────────┘
         │
         ▼
┌─────────────────┐
│       310       │
└─────────────────┘
```

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. CAUBET et al.** Design of an Attitude Stabilization Electromagnetic Module for Detumbling Uncooperative Targets. *IEEE Aerospace Conference,* 2014